# EUROPÄISCHE PATENTSCHRIFT

(11) **EP 1 922 798 B1**
(45) Veröffentlichungstag und Bekanntmachung des Hinweises auf die Patenterteilung: **23.12.2015**
(21) Anmeldenummer: 06778208.6
(22) Anmeldetag: 10.08.2006
(51) Int. Cl.: H02K 9/06, A47J 43/044

(54) **ELEKTROMOTOR FÜR EIN ELEKTROMOTORISCHES KÜCHENGERÄT MIT VERBESSERTER LUFTKÜHLUNG**
ELECTRIC MOTOR FOR AN ELECTROMOTIVE KITCHEN APPLIANCE FEATURING IMPROVED AIR COOLING
MOTEUR ELECTRIQUE POUR USTENSILE DE CUISINE ELECTRIQUE COMPRENANT UN REFROIDISSEMENT PAR AIR AMELIORE

(30) Priorität: 26.08.2005 DE 102005040546
(43) Veröffentlichungstag der Anmeldung: 21.05.2008
(73) Patentinhaber: BSH Hausgeräte GmbH, 81739 München (DE)
(72) Erfinder: PESEC, Jurij, 3301 Petrovce (SI); BOGDAH, Kreca, 3310 Zalec (SI); OBLAK, Aleksander, 3332 Recica/Savinji (SI)
(86) Internationale Anmeldenummer: PCT/EP2006/065204
(87) Internationale Veröffentlichungsnummer: WO 2007/023096

(56) Entgegenhaltungen:
- DE-A1- 1 454 164
- DE-A1- 4 434 598
- DE-A1- 10 155 224
- DE-A1- 10 261 370
- DE-B- 1 121 201
- GB-A- 1 147 207
- US-A- 2 552 023
- US-A- 3 456 180
- US-A- 4 613 086

## Beschreibung

Die Erfindung betrifft einen Elektromotor für ein elektromotorisches Küchengerät, insbesondere für eine elektromotorische Solo- und/oder Universalküchenmaschine, umfassend ein Motorgehäuse, in dem ein entlang einer Motordrehachse drehbeweglicher Rotor mit einem damit drehfest verbundenen Lüfterrad angeordnet ist sowie ein Stator mit einer Statorwicklung, wobei die Statorwicklung ein Wicklungsende aufweist, welches sich parallel zu einer Richtung der Motordrehachse zum Lüfterrad hin erstreckt; sowie ein elektromotorisches Küchengerät.

Aus der DE 33 19 513 ist eine Küchenmaschine, insbesondere eine Schneide-, Rühr-, Knet-, oder Mixmaschine, bekannt, die eine Arbeitswelle aufweist, die erfindungsgemäß mit wenigstens zwei elektromotorisch angetriebenen Schneckengetrieben in Wirkverbindung steht, die das geforderte Drehmoment gemeinschaftlich auf die Arbeitswelle übertragen.

### Ferner offenbaren US 3 456 180 A, DE 1 121 201 A und US 2 552 023 A Küchengeräte mit geeigneten Lüfteranordnungen zum Kühlen des Antriebmotors.

Küchenmaschinen besitzen in der Regel einen Antriebsmotor, der eine Arbeitswelle bei einer Leistungsaufnahme von z. B. 400 W mit einer Drehzahl von z. B. 1.500 bis 3.000 Umdrehungen/Minute in Umdrehungen versetzt. Bei Vielzweck-Küchenmaschinen besteht die zusätzliche Forderung, dass die Arbeitswelle das für den Einzelfall erforderliche Drehmoment liefert, das in Abhängigkeit vom Verwendungszweck, z. B. der Verarbeitung von Fleisch, der Aufbereitung von Teigwaren, der Zerkleinerung von Gemüse oder dergleichen, recht hoch sein kann. Als Antriebsmotoren für derartige Küchenmaschinen werden bisher Einphasenkondensatormotoren oder Universalmotoren verwendet. Während Einphasenkondensatormotoren den Vorteil einer anpassbaren Drehzahl haben und sie somit kein Untersetzungsgetriebe benötigen, besitzen sie jedoch den Nachteil, dass sie nur ein geringes Anlaufmoment aufweisen, welches zu Startschwierigkeiten führt. Zur Vermeidung dieses Nachteils werden daher überdimensionierte Motoren oder Motoren von komplexer Bauweise verwendet, bei denen die Hilfswicklung vor Erreichen der Synchrondrehzahl mit mehr Strom als während des Dauerbetriebs beaufschlagt wird. Demgegenüber können Universalmotoren nur mit einem Untersetzungsgetriebe in Form eines Schnecken-, Riemen-, oder Zahnradgetriebes betrieben werden, weil ihre Drehzahlen bei etwa 15.000 bis 30.000 Umdrehungen/Minute liegen, was eine Untersetzung von etwa 1/10 bis 1/20 erforderlich macht. Durch diese Übersetzung ist der Raumbedarf der Motoren vergleichsweise groß. Nachteilig bei langsam drehenden Motoren ist darüber hinaus, dass aufgrund der geringen Umdrehungsfrequenz, insbesondere bei einer starken Belastung des Elektromotors, die durch ein Lüfterrad des Motors bewirkte Luftkühlung oft nicht ausreicht, um den Elektromotor dauerhaft hinreichend stark zu kühlen. In der Folge kann es bei einem längeren Betrieb des Elektromotors und bei einer starken Belastung (durch welche u.a. auch die Umlauffrequenz gesenkt und damit die Kühlwirkung reduziert werden kann) zu einer Überhitzung kommen, die den Elektromotor beschädigen kann.

Es ist daher Aufgabe der vorliegenden Erfindung, einen Elektromotor sowie ein Küchengerät umfassend einen Elektromotor bereitzustellen, wobei das Problem einer Überhitzung aufgrund einer starken Belastung des Elektromotors verringert wird, so dass die Zuverlässigkeit des Betriebs des Elektromotors bzw. des Küchengeräts gesteigert wird.

Diese Aufgabe wird erfindungsgemäß durch den Elektromotor sowie durch das Küchengerät, wie **im** unabhängigen **Anspruch** angegebenen, gelöst. Weitere vorteilhafte Ausgestaltungen und Weiterbildungen, die jeweils einzeln angewandt oder beliebig miteinander kombiniert werden können, sind Gegenstand der jeweilig abhängigen Ansprüche.

Der erfindungsgemäße Elektromotor für ein elektromotorisches Küchengerät, insbesondere für eine elektromotorische Solo- oder Universalküchenmaschine, umfasst ein Motorgehäuse, in dem ein entlang einer Motordrehachse drehbeweglicher Rotor mit einem damit drehfest verbundenen Lüfterrad angeordnet ist sowie ein Stator mit einer Statorwicklung , wobei die Statorwicklung ein Wicklungsende aufweist, welches sich parallel zu einer Richtung der Motordrehachse zum Lüfterrad hin erstreckt, wobei das Wicklungsende und das Lüfterrad sich frei gegenüber liegen. Mit Hilfe des Lüfterrads wird insbesondere Kühlluft von innen aus dem Motorgehäuse nach außen gefördert. Die Förderung der Kühlluft erfolgt radial nach außen, hierbei wirken insbesondere die Schaufelwirkung des Kühlrads und die Fliehkräfte der Kühlluft zusammen.

Bei den bekannten, in Küchengeräten eingesetzten Elektromotoren war zwischen den Wicklungsenden der Statorwicklung und dem Lüfterrad eine Wand vorgesehen, um die Kühlluft zu beschleunigen. Nun ist es vorgesehen, dass sich entlang einer Richtung der Motordrehachse kein die Strömung der Kühlluft behindernder Gegenstand, insbesondere keine Führungs- oder Trennwand, in dem Zwischenraum zwischen den Wicklungsenden und dem Lüfterrad befindet. Entlang der Richtung der Motordrehachse liegt das Lüfterrad dem Wicklungsende frei gegenüber, so dass die durch das Lüfterrad erzeugte Kühlluft unmittelbar mit dem Wicklungsende der Statorwicklung in Kontakt gelangt und diese kühlt. Insbesondere streicht die Kühlluft an der in Bezug auf die Motordrehachse definierten Stirnseite der Statorwicklung vorbei und kühlt diese. Durch Kühlung des Wicklungsendes wird eine umfassende Kühlung der Statorwicklung erzielt, da durch den Wärmeentzug am Wicklungsende ein Temperaturgefälle in der Statorwicklung erzeugt wird, wodurch die Temperatur der Statorwicklung gesenkt wird.

Das Lüfterrad saugt insbesondere Luft, die sich in der unmittelbaren Nähe des Wicklungsendes befindet und von dem Wicklungsende aufgewärmt ist, auf und befördert sie aus dem Motorengehäuse heraus. Es hat sich gezeigt, dass sich durch diese Maßnahme die Kühlung des Elektromotors erheblich verbessern lässt und somit ein Betrieb des Elektromotors über längere Zeit unter stärkerer Last als bisher möglich ist.

Der Elektromotor kann ein Wechselstrommotor, ein Kondensatormotor oder ein Spaltmotor sein. Der Kondensatormotor ist ein Elektromotor, der sehr ähnlich wie ein Asynchronmotor aufgebaut ist. Wie dieser besitzt er einen kurzgeschlossenen Käfigläufer, in dem durch ein vom Stator erzeugtes Drehfeld ein Drehmoment erzeugt wird. Im Unterschied zum drehstromgespeisten Asynchronmotor läuft der Kondensatormotor mit einphasigem Wechselstrom. Da zur Erzeugung eines Drehfeldes mindestens zwei phasenverschobene Spannungen nötig sind, die das Wechselstromnetz nicht liefern kann, wird eine der beiden Statorwicklungen direkt aus dem Wechselstromnetz versorgt, während zur zweiten Wicklung ein Kondensator in Reihe geschaltet wird, der so die Phasenverschiebung bewirkt. Auch ein Spaltpolmotor ähnelt im Aufbau einem Asynchronmotor. Wie dieser besitzt er einen kurzgeschlossenen Käfigläufer, in dem durch ein vom Stator erzeugtes Drehfeld ein Drehmoment erzeugt wird. Im Unterschied zum drehstromgespeisten Asynchronmotor läuft der Spaltpolmotor mit einphasigem Wechselstrom. Da zur Erzeugung eines Drehfeldes mindestens zwei phasenverschobene magnetische Felder nötig sind, die das Wechselstromnetz nicht liefern kann, wird das von der einen Statorwicklung erzeugte Feld einem gespaltenen Polschuh zugeführt, um deren einen Teil Kurzschlussringe aus dickem Kupfer gelegt sind. Dieser Teil wird Spaltpol genannt; sein Magnetfeld erfährt durch die Kurzschlussringe eine zeitliche Ablenkung gegenüber dem im verbleibenden Hauptpol, welches die benötigte Phasenverschiebung bewirkt.

Das Motorgehäuse weist Eintrittsöffnungen und Austrittsöffnungen für von dem Lüftrad beförderte Kühlluft auf, und die Länge der Austrittsöffnung entlang der Richtung der Motordrehachse entspricht im Wesentlichen der axialen Länge des Lüfterrades. Das Motorgehäuse weist Austrittsöffnungen für von dem Lüftrad geförderte Kühlluft, die einen nach innen in das Motorgehäuse **auskragenden** ersten Rand aufweisen, der als erster Strömungskanal zur Beschleunigung der Kühlluft dient. Das Motorgehäuse **weist** auch Austrittsöffnungen für von dem Lüfterrad geförderte Kühlluft aufweisen, die einen nach Außen **auskragenden** zweiten Rand auf, der als zweiter Strömungskanal zur Beschleunigung der Kühlluft dient. Mit Hilfe des ersten bzw. zweiten Strömungskanals wird die Kühlluftströmung und damit die Kühleffizienz positiv beeinflusst.

Vorteilhafterweise umfasst das Lüfterrad Ventilatorflügel und eine senkrecht zum Motor drehbare angeordnete Trägerscheibe mit einer ersten und einer zweiten Scheibenfläche, wobei die Ventilatorflügel an der Trägerscheibe befestigt sind. Mit Hilfe der Trägerscheibe können die Ventilatorflügel einerseits mechanisch stabilisiert werden, andererseits kann die Trägerscheibe ihrerseits durch Wärmeleitung Wärme von der Motorwelle an die Ventilatorflügel leiten, so dass neben der Konvektionskühlung der am Rotor befindlichen Rotorwicklungen durch vorbeiströmende Kühlluft auch eine Kühlung aufgrund der Wärmeleitung durch einen Wärmefluss von den Rotorwicklungen über die Motorwelle hin zum Lüfterrad erzielt wird. Insbesondere sind die Ventilatorflügel gemeinsam auf der ersten Scheibenfläche angeordnet, die vorzugsweise zur Statorwicklung hinweist. Die Befestigung der Ventilatorflügel an der ersten Scheibenfläche ist vorzugsweise gut wärmeleitend. Beispielsweise kann ein Lüfterrad mit den Ventilatorflügeln und der Trägerscheibe durch Spritzguß aus einem Metall hergestellt werden.

Die maximale nominale Drehfrequenz des Elektromotors kann in einem Bereich von 8.000 bis 20.000 Umdrehungen/Minute, insbesondere in einem Bereich von 10.000 und 15.000 Umdrehungen/Minute, liegen. Durch die Anordnung des Lüfterrads gegenüberliegend zu den Statorwicklungen sind jedoch unter Last erheblich geringere Umdrehungsfrequenzen dauerhaft möglich, ohne dass der Elektromotor überhitzt.

Die maximale aufnehmbare elektrische Nennleistung des Elektromotors liegt in einem Bereich von 200 W bis 1.200 W, insbesondere in einem Bereich von 600 W bis 900 W. Der Durchmesser der Trägerscheibe bzw. des Lüfterrads entspricht vorzugsweise in etwa dem Durchmesser der Statorwicklungen in einer Ebene senkrecht zur Motordrehachse. Der Abstand zwischen dem Lüfterrad und der Statorwicklung beträgt vorzugsweise weniger als 3 mm, insbesondere weniger als 2 mm, insbesondere bevorzugt weniger als 1 mm.

Durch die unmittelbare Anordnung des Lüfterrads vor der Statorwicklung, bildet sich das dem Lüfterrad zugewandte Wicklungsende der Statorwicklung im Betrieb des Motors als Kältepunkt für die Statorwicklung aus, wobei aufgrund der guten Wärmeleitfähigkeit der Statorwicklung, die üblicherweise aus thermisch gut leitenden Kupfer gefertigt ist, für eine effiziente Kühlung auch in Bereichen der Statorwicklung sorgt, die von dem Wicklungsende vergleichsweise weit entfernt liegen.

Das erfindungsgemäße elektromotorische Küchengerät, insbesondere elektromotorische Solo- oder Universalküchenmaschine umfasst den erfindungsgemäßen Motor. Das elektromotorische Küchengerät zeichnet sich dadurch aus, dass der Elektromotor aufgrund der effizienten Kühlung besonders klein dimensioniert werden kann, wodurch die Kompaktheit des Küchengeräts gesteigert und das Gewicht der Küchenmaschine reduziert werden kann. Mit einer derartigen Kühlung ist ein Betrieb des Küchengeräts auch über einen längeren Zeitraum unter großer Last möglich, ohne dass das Küchengerät Schaden nimmt.

Weitere vorteilhafte Einzelheiten und Ausgestaltungen werden anhand der folgenden Zeichnung, welche die Erfindung nicht einschränken, sondern lediglich exemplarisch illustrieren soll, näher erläutert.

Es zeigen schematisch:
Fig. 1 ein Küchengerät in einer perspektivischen Schrägansicht seitlich von oben;
Fig. 2 eine Elektromotor-Getriebestufen-Anordnung des Küchengeräts in einer perspektivischen Schrägansicht beim Verbinden des Elektromotors mit einer Getriebestufe;
Fig. 3 die Elektromotor-Getriebestufen-Anordnung nach Fig. 2 nach vollendeter Vormontage;
Fig. 4 die Elektromotor-Getriebestufen-Anordnung nach den Figuren 2 und 3 vor einem Zusammenbau des Elektromotors mit der Getriebestufe;
Fig. 5 eine weitere Elektromotor-Getriebestufen-Anordnung für ein Küchengerät vor der Vormontage des Elektromotors mit der Getriebestufe;
Fig. 6 eine Elektromotor-Getriebestufen-Anordnung nach Figuren 2 bis 5 mit Verstärkungsrahmen;
Fig. 7 den Verstärkungsrahmen nach Fig. 6;
Fig. 8 einen Längsschnitt durch die Elektromotor-Getriebestufen-Anordnung nach einer der Figuren 2 bis 6 mit einer vertikalen Schnittebene;
Fig. 9 einen Längsschnitt der Elektromotor-Getriebestufen-Anordnung nach einer der Figuren 2 bis 6 oder 8 in einem Längsschnitt mit einer waagerechten Schnittebene;
Fig. 10 eine weitere Ausführungsform einer Elektromotor-Getriebestufen-Anordnung des Küchengeräts **als Beispiel zum Verständnis der Erfindung** im Längsschnitt mit einer vertikalen Schnittebene;
Fig. 11 einen senkrecht zur Motorendrehachse verlaufender Querschnitt durch eine Getriebestufe eines Küchengeräts;
Fig. 12 eine schematische Draufsicht einer Getriebestufenanordnung eines Küchengeräts;
Fig. 13 einen Längsschnitt durch eine Elektromotor-Getriebestufen-Anordnung eines erfindungsgemäßen Küchengeräts mit einer vertikalen Schnittebene.

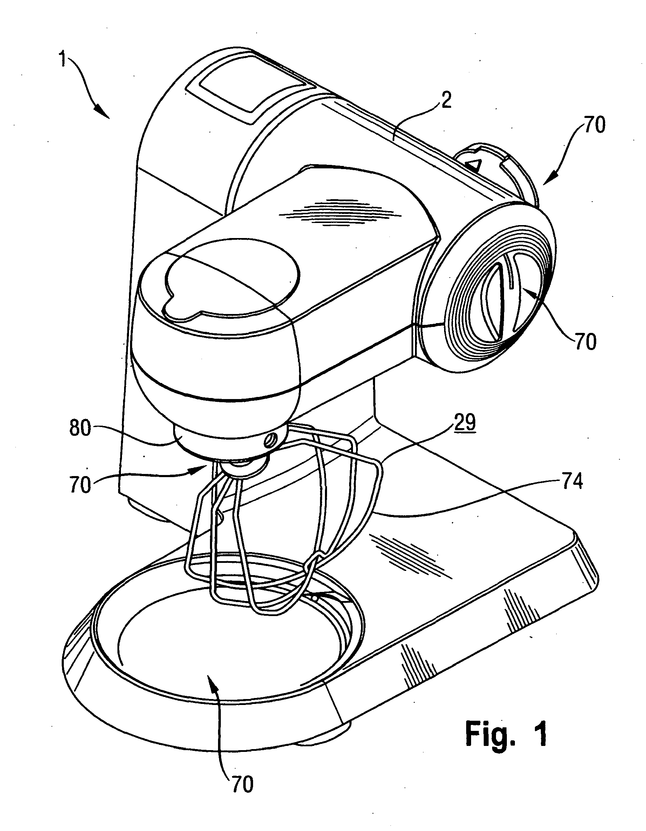

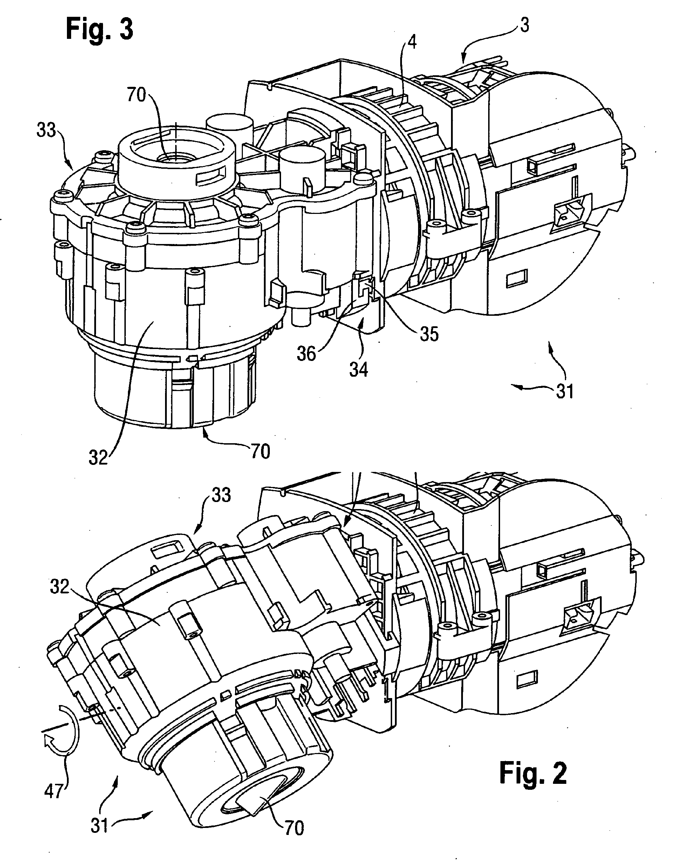

Fig. 1 zeigt ein Küchengerät 1 in einer perspektivischen Schrägansicht seitlich von oben mit einem Gerätegehäuse 2 und vier verschiedenen Aufnahmen 70 für ein Werkzeug 29, welches als Rührbesen 74 ausgestaltet sein kann. Hierbei sind drei der vier Aufnahmen 70 mit dem Elektromotor 3 (siehe Fig. 2 bis 6) antreibbar.

Fig. 2 zeigt eine Elektromotor-Getriebestufen-Anordnung 31 des Küchengeräts 1 während einer Vormontage in einer perspektivischen Schrägansicht, wobei eine Getriebestufe 33 mit dem Elektromotor 3 verbunden wird, indem ein Getriebegehäuse 32 und ein Motorgehäuse 4 miteinander mit einem Bajonettverschluss 34 verbunden werden, indem das Getriebegehäuse 32 um einen Winkel verdreht auf das Motorgehäuse 4 aufgesetzt wird und durch Drehung entlang einer Drehrichtung 47 fixiert wird. Mit Hilfe des Bajonettverschlusses 34 ist eine mittels einer Dreh-Streckbewegung bewirkte, einfache aber zuverlässige Verbindung der Getriebestufe 33 mit dem Elektromotor 3 möglich.

Fig. 3 zeigt die Elektromotor-Getriebestufen-Anordnung 31 nach Fig. 2 in perspektivischer Ansicht, wobei die Getriebestufe 33 mit dem Bajonettverschluss 34 an dem Elektromotor 3 befestigt ist, indem ein erstes Bajonettverschlussteil 35 an dem Elektromotor 3 in ein entsprechend komplementär ausgestaltetes zweites Bajonettverschlussteil an der Getriebestufe 33 in Eingriff gelangt.

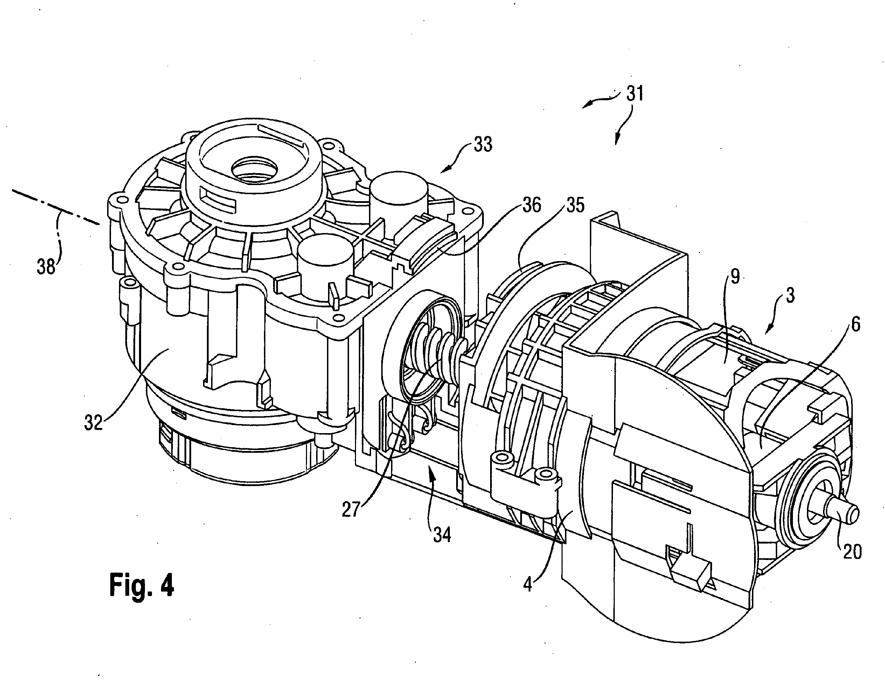

Fig. 4 zeigt eine weitere Elektromotor-Getriebestufen-Anordnung 31 des Küchengeräts 1 im Zustand unmittelbar vor der Vormontage in einer perspektivischen Schrägansicht, wobei der Elektromotor 3 und die Getriebestufe 33 entlang einer Verbindungslinie 38 zusammengeschoben werden, während eine Getriebeschnecke 27 des Elektromotors 3 in das Innere der Getriebestufe 33 eindringt, wobei durch Drehung der Getriebestufe 33 relativ zum Elektromotor um die Verbindungslinie 38 das erste Bajonettverschlussteil 35 am Elektromotor 3 in das zweite Bajonettverschlussteil 36 an der Getriebestufe 33 eingreift.

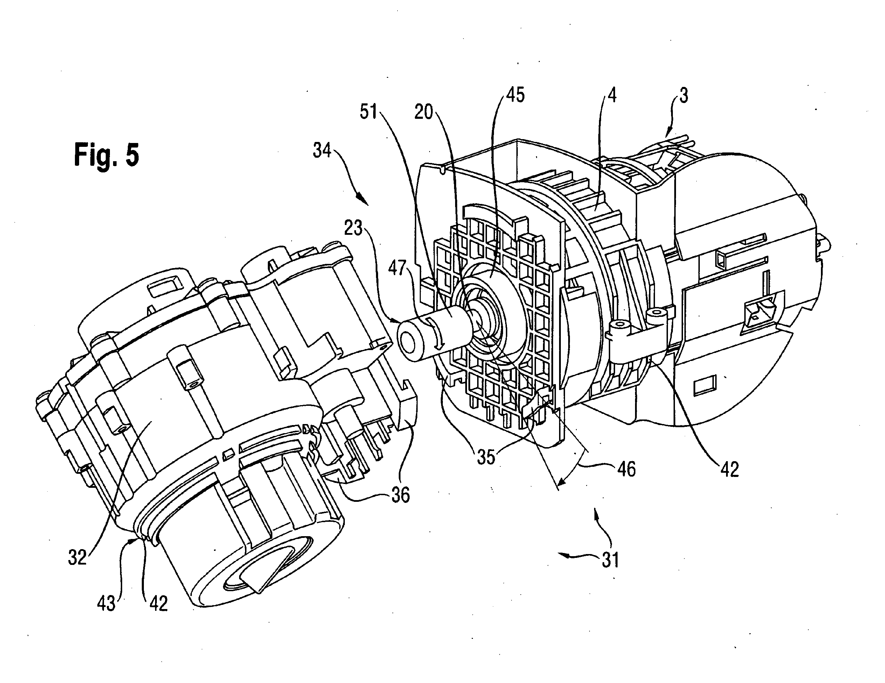

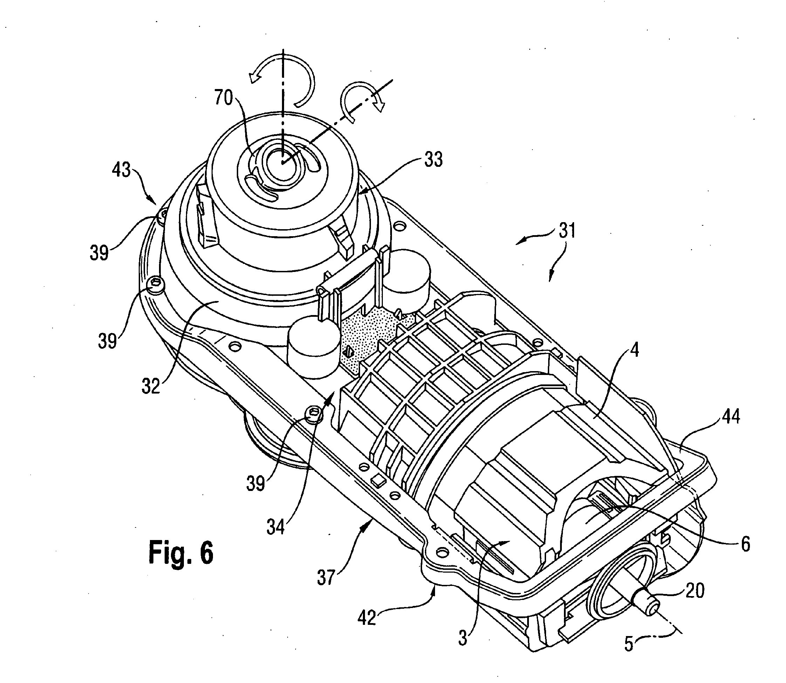

Fig. 5 zeigt eine Elektromotor-Getriebestufen-Anordnung 31 des Küchengeräts 1 bevor sie zusammengesetzt wird. Zum Verschließen des Bajonettverschlusses 34 wird das Getriebegehäuse 32 relativ zum Motorgehäuse 4 um einen Verschlusswinkel 46 von 30 ° gedreht, damit die am Motorgehäuse 4 befindlichen ersten Bajonettverschlussteile 35 in Eingriff mit den am Getriebegehäuse 32 befindlichen zweiten Bajonettverschlussteilen 36 gelangen. Auf einer Motorwelle 20 sitzt ein als erstes Stirnschraubrad 51 ausgestaltetes Getriebeelement 23, welches sich im Betrieb des Elektromotors 3 entlang der Drehrichtung 47 dreht, so dass die Drehung der Motorwelle 20 den Bajonettverschluss 34 im Betrieb fixiert. Das Getriebegehäuse 32 bzw. das Motorgehäuse 4 weist Verbindungsgegenelemente 42 auf, die als Verbindungsaufnahmen 43 ausgestaltet sind, um einen Verstärkungsrahmen 37 (siehe Fig. 6) mit entsprechenden Verbindungsvorsprüngen 41 aufzunehmen. Mit Hilfe des Verstärkungsrahmens 37 wird das Getriebegehäuse 32 zusätzlich gegenüber dem Motorgehäuse 4 stabilisiert.

Fig. 6 zeigt die Elektromotor-Getriebestufen-Anordnung 31 nach Fig. 5 im vormontierten Zustand in perspektivischer Schrägansicht, wobei der Verstärkungsrahmen 37 die Getriebestufe 33 und den Elektromotor 3 zusätzlich gegen eine Torsion relativ zueinander verstärkt. Der Verstärkungsrahmen 37 wird mit Hilfe von Schrauben 39 an dem Motorgehäuse 4 bzw. dem Getriebegehäuse 32 verschraubt. Hierzu ist der Verstärkungsrahmen 37, der eine L-Form aufweist, mit Hilfe von Verbindungsaufnahmen 43 am Motorgehäuse 4 bzw. am Getriebegehäuse 32 fixiert. Der Verstärkungsrahmen 37 ist als L-Profil ausgestaltet. Die Drehung der Motorachse 20 des Elektromotors 3 um die Motordrehachse 5 wirkt in Schließrichtung des Bajonettverschlusses 34, so dass sich die Getriebestufe 33 auch unter starker Last nicht von dem Elektromotor 3 lösen kann. Die Getriebestufe 33 weist eine Aufnahme 70 auf, die ein Werkzeug 29 wie z.B. einen Rührbesen 74 aufnehmen kann.

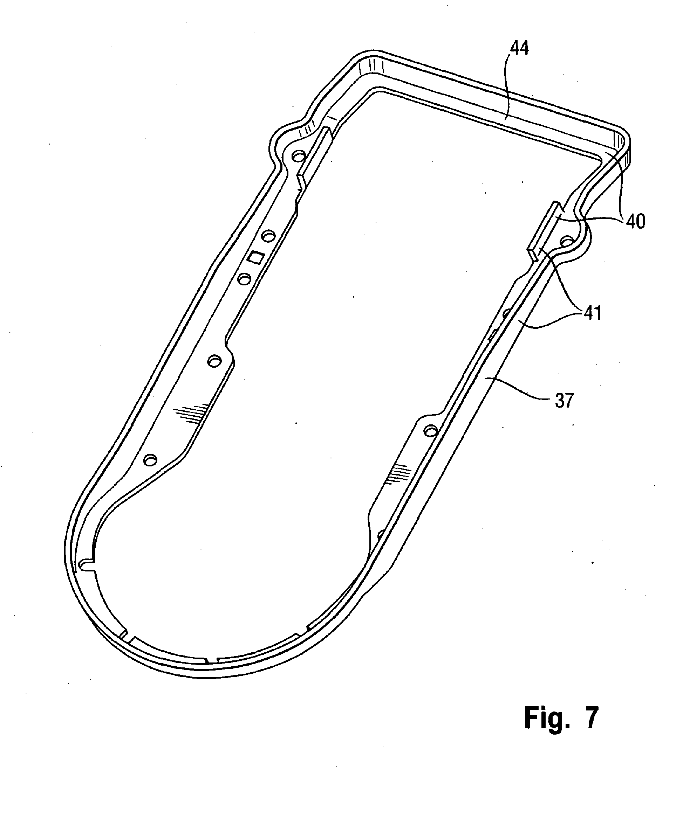

Fig. 7 zeigt den Verstärkungsrahmen 37 nach Fig. 6 in einer perspektivischen Schrägansicht. Der Verstärkungsrahmen 37 ist als L-Profil 44 mit entsprechenden Verbindungselementen 40 sowie Verbindungsvorsprüngen 41 ausgestaltet, damit er an dem Getriebegehäuse 32 bzw. dem Motorgehäuse 4 befestigt werden kann, wozu nur wenige Schrauben 39 erforderlich sind. Mit Hilfe des Verstärkungsrahmens können Drehmomente des Elektromotors 3 von etwa 20 Nm aufgenommen werden. Hierdurch wird eine besonders steife Konstruktion realisiert, die eine Vormontage der Elektromotor-Getriebestufen-Anordnung 31 ermöglicht, so dass ein Testen und Spezifizieren der Elektromotor-Getriebestufen-Anordnung 31 vor einem Einbau in ein Gerätgehäuse 2 des Küchengeräts 1 erfolgen kann.

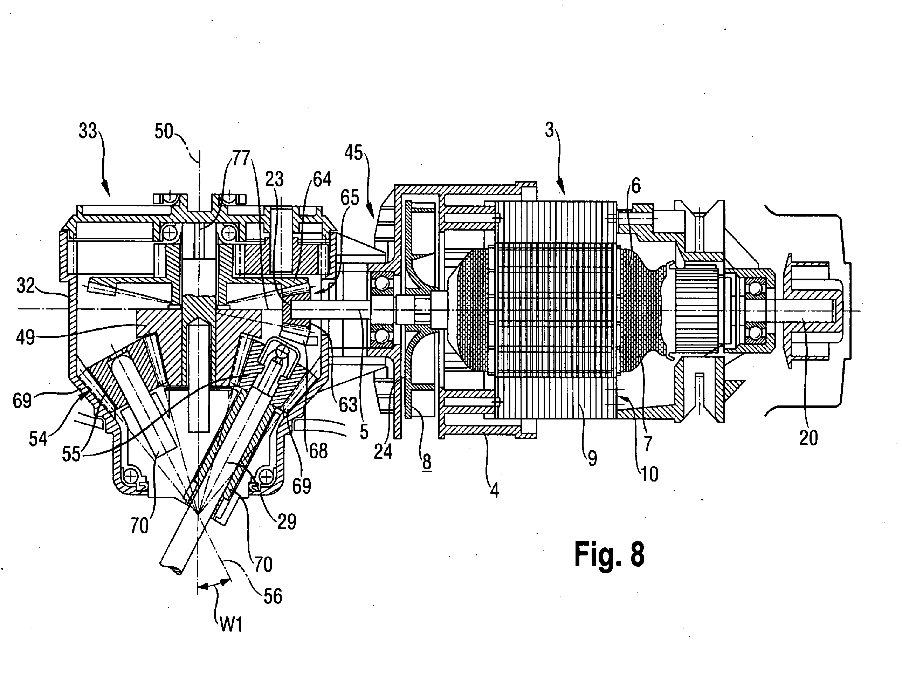

Fig. 8 zeigt einen Längsschnitt durch eine Elektromotor-Getriebestufen-Anordnung 31 mit einer vertikalen Schnittebene. Der Elektromotor 3 umfasst das Motorgehäuse 4, in dem ein Stator 9 mit entsprechenden Statorwicklungen 10 und einem darin beweglichen Rotor 6 mit entsprechenden Rotorwicklungen 7 angeordnet sind. Auf der Motorwelle 20 sitzt ein Kühlrad 24, welches als Lüfterrad 8 ausgestaltet ist. Durch die Dimensionierung des Kühlrads 24, insbesondere die Stärke des verwendeten Materials sowie die thermischen Eigenschaften des verwendeten Materials kann auch an den Rotorwicklungen 7 bzw. in der Getriebestufe 33 entwickelte Wärme durch Wärmeleitung abgeführt werden. An der Motorwelle 20 ist ein Getriebeelement 23 drehfest verbunden, welches als erstes Kegelrad 23 zusammen mit einem zweiten Kegelrad 64 der Getriebestufe 33 ein Kegelradgetriebe 65 bildet. Mit Hilfe des zweiten Kegelrads 64 wird ein Sonnenrad 49 eines Planetengetriebes 54 in Drehung versetzt, welches seinerseits in Eingriff mit drei Planetenrädern 55 steht, die ihrerseits auf einem Hohlrad 49 ablaufen. Durch die Drehung der Motorwelle 20 werden sowohl die Planetenräder 55 um ihre jeweiligen Planetenradachsen 56 als auch um eine Sonnenradachse 50 gedreht, so dass ein in eine Aufnahme 70 des Planetenrads 55 gestecktes Werkzeug 29 eine Drehbewegung auf einem Kegel durchführt. Die Sonnenradachse 50 steht senkrecht zur Motorendrehachse 5. Die Getriebewellen 77 des Kegelradgetriebes 65 stehen im Wesentlichen senkrecht aufeinander. Dabei liegt die Motordrehachse 5 im Wesentlichen koplanar in einer Ebene mit der Sonnenradachse 50. Der durch die Planetenradachse 56 und die Sonnenradachse 50 definierte Winkel W1 beträgt in etwa 30 °.

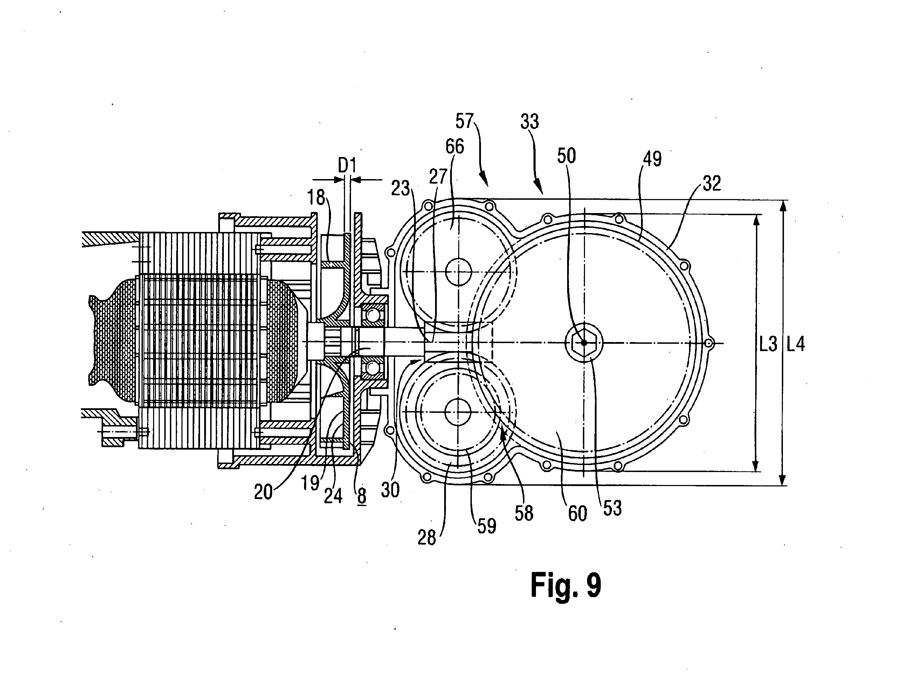

Fig. 9 zeigt eine Elektromotor-Getriebestufen-Anordnung 31 des Küchengeräts 1 in einem Längsschnitt mit einer waagerechten Schnittebene und zeigt eine Getriebestufe 33, die ein Schneckengetriebe 30 und ein Stirnradgetriebe 58 aufweist. Auf der Motorwelle 9 ist eine Getriebeschnecke 27 drehfest befestigt, welche mit einem Schneckenrad 28 in Eingriff gelangt, das in drehfester Verbindung mit einem ersten Stirnrad 59 steht. Gegenüberliegend zu dem Schneckenrad in Bezug auf die Getriebeschnecke 27 ist ein Gegenrad 66 angeordnet, welches in Eingriff mit der Getriebeschnecke 27 steht und Gegenkräfte aufnimmt. Das erste Stirnrad 59 steht in Eingriff mit einem zweiten Stirnrad 60, welches über eine Sonnenradwelle 53 mit dem Sonnenrad 49 in drehfester Verbindung steht. Während das Schneckengetriebe ein Übersetzungsverhältnis von im Wesentlichen 1:1 aufweist, wird mit dem Stirnradgetriebe 58 eine Untersetzung von 4:1 erzielt. Die Länge L3 beträgt zwischen 80 und 100 mm. Die Länge L4 beträgt zwischen 90 und 120 mm. Mit Hilfe des Kühlrads 6 kann an der Getriebeschnecke 27 erzeugte Wärme durch Wärmeleitung geführt werden, indem die erzeugte Wärme im Inneren der Motorwelle 20 an das Kühlrad 24 abgegeben wird. Das Kühlrad weist einen breiten Sitz und eine große Dicke D1 auf, um Wärmeübergangswiderstände und Wärmeleitungswiderstände möglichst gering zu halten. Hierdurch wird eine zusätzliche Kühlung des Schneckengetriebes 30 überflüssig. Das Kühlrad 24 weist darüber hinaus Ventilatorflügel 18 auf, die die Kühlung unterstützen.

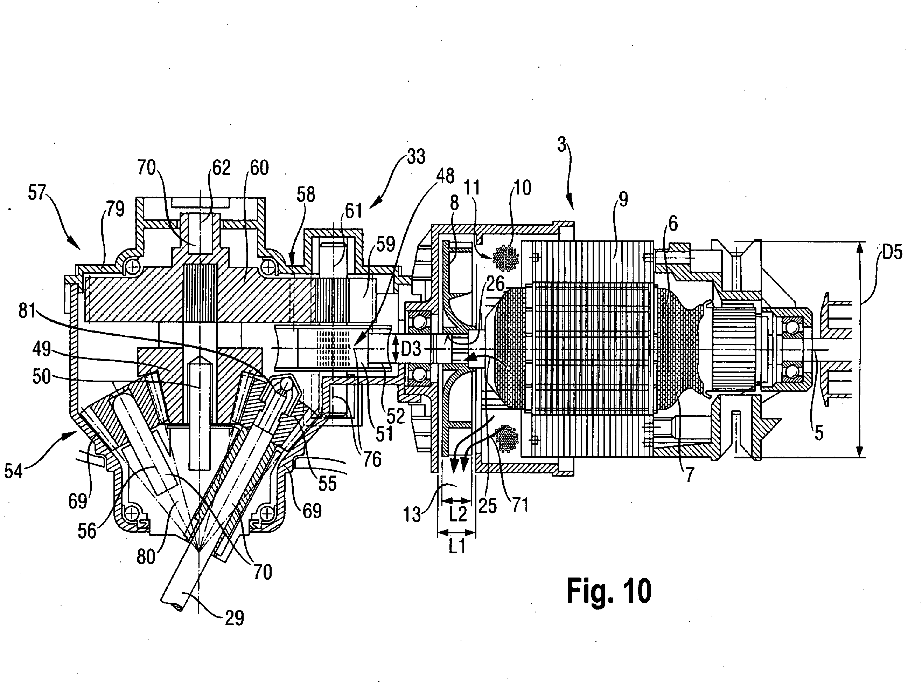

Fig. 10 zeigt eine Elektromotor-Getriebestufen-Anordnung 31 des Küchengeräts 1 **als Beispiel zum Verständnis der Erfindung** mit einem Stirnradgetriebe 58 und einem Stirnschraubradgetriebe 48 als Getriebestufe 33, wobei das Stirnschraubradgetriebe 48 ein erstes Stirnschraubrad 51, welches auf der Motorwelle 20 befestigt ist, und ein zweites Stirnschraubrad 52 aufweist, welches drehfest mit einem ersten Stirnrad 59 verbunden ist. Das erste Stirnrad 59 steht in Eingriff mit einem zweiten Stirnrad 60, welches auf einer zweiten Stirnradwelle 62 befestigt ist und mit dem Sonnenrad 49 drehfest verbunden ist. Die zweite Stirnradwelle 62 ist im Wesentlichen parallel zu einer ersten Stirnradwelle 61 des ersten Stirnrads 59. Die zweite Stirnradwelle 62 weist eine Aufnahme 70 für ein Werkzeug 29 auf. Um dieses Werkzeug in die Aufnahme 70 einzuführen, muss ein Gehäusedeckel 79 angehoben werden. Das Stirnradgetriebe 58 und das Stirnschraubradgetriebe 48 bilden eine drehungsübertragende Verbindung für das Planetengetriebe 54, welches das Sonnenrad 49, drei Planetenräder 55 und ein Hohlrad 69 aufweist. Das Sonnenrad 49, die Planetenräder 55 und das Hohlrad 69 sind kegelförmig, so dass bei einer Drehung der Motorwelle 20 ein Werkzeug 29, welches in eine Aufnahme 70 der Planetenräder 55 eingesetzt ist, um eine Planetenradachse 56 dreht, die ihrerseits auf einem Kegel um eine Sonnenradachse 50 rotiert. Aufgrund der Kegelform des Sonnenrads 49 der Planetenräder 55 und des Hohlrads 69 führt das Werkzeug 29 eine Taumelbewegung durch, wobei die Taumelbewegung auf einem Kegel mit einem Öffnungswinkel von ungefähr 60 ° verläuft. Das Werkzeug 29 kann in die Aufnahme 70 eines Planetenrads 55 gesteckt und mit Hilfe einer Werkzeugarretierung 81 arretiert werden. Das Stirnschraubradgetriebe 48 weist im Wesentlichen senkrecht zueinander stehende Getriebewellen 76 auf. Der Elektromotor 3 weist einen Rotor 6 auf, der Rotorwicklungen 7 trägt, die von der durch das Lüfterrad 8 erzeugten Kühlluft 71 gekühlt werden.

Ein Stator 9 des Elektromotors 3 weist Statorwicklungen 10 auf, die dem Lüfterrad 8 frei, d. h. ohne ein dazwischen befindliches Hindernis, gegenüberliegen. Hierdurch kann die Kühlluft 71 direkt mit einem Wicklungsende 11 der Statorwicklung 10 in Berührung gelangen. Das Motorgehäuse 4 weist Austrittsöffnungen 13 für die Kühlluft 71 auf, welche eine Länge L1 aufweisen, die in etwa der axialen Länge L2 des Lüfterrads 8 entspricht. Die Dicke des Lüfterrads 8 beträgt 30 % des Durchmessers D3 der Motorwelle 20 und bewirkt eine gute Wärmeabfuhr von der Motorwelle 20 weg und hin zu radial außen liegenden Bereichen des Lüfterrades 8. Der Durchmesser D5 des Kühlrads 64 entspricht im Wesentlichen dem Durchmesser der Statorwicklungen 10 in einer Ebene senkrecht zur Motordrehachse 5.

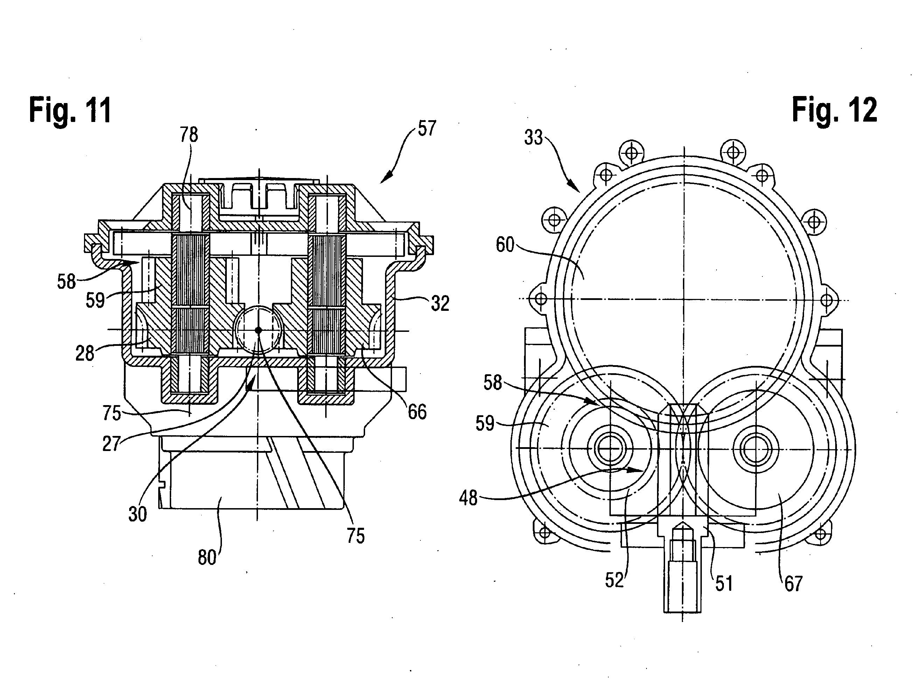

Fig. 11 zeigt eine drehungsübertragende Verbindung 57 mit einem Stirnradgetriebe 58 und einem Schneckengetriebe 30 im Querschnitt entlang einer vertikalen Schnittebene senkrecht zur Motordrehachse 5. Eine Getriebeschnecke 27 greift in ein Schneckenrad 28, welches über eine Getriebewelle 75 mit einem ersten Stirnrad 59 drehfest verbunden ist, welches seinerseits in ein zweites Stirnrad 60 (nicht gezeigt) eingreift. Ein Schneckengegenrad 66 nimmt Gegenkräfte auf, so dass die Getriebeschnecke 27 nicht nach rechts ausbrechen kann. An einem Gerätekopf 80 kann ein Rührbesen 74 (siehe Fig. 1) gesetzt werden.

Fig. 12 zeigt eine weitere Ausführungsform der Getriebestufe 33 mit einem Stirnradgetriebe 58 und einem Stirnschraubradgetriebe 48, wobei ein erstes Stirnschraubrad 28 mit einem zweiten Stirnschraubrad 52 in Eingriff gelangt, welches drehfest verbunden mit einem ersten Stirnrad 59 ist, dass in Eingriff mit einem zweiten Stirnrad 60 steht. In Bezug auf das erste Stirnschraubrad 51 gegenüberliegend zu dem zweiten Stirnschraubrad 52 ist ein Stirnschraubgegenrad 67 angeordnet, um Gegenkräfte aufnehmen zu können.

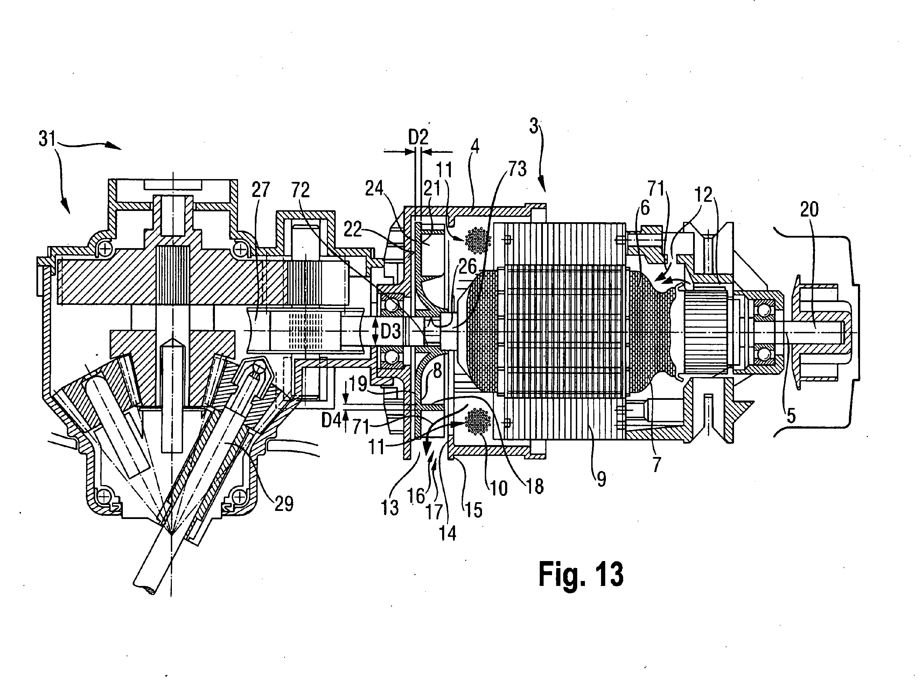

Fig. 13 zeigt eine **erfindungsgemäße** Ausführungsform der Elektromotor-Getriebestufen-Anordnung 31 im Längsschnitt mit einer vertikalen Schnittebene, wobei auf der Motorwelle 20 ein Kühlrad 24 befestigt ist, welches mit einer gut wärmeleitenden Kontaktfläche 26 mit der Motorwelle 20 verbunden ist, um einen Wärmeübergangswiderstand 72 möglichst klein zu gestalten. Wärme, die an der Getriebeschnecke 27 oder in den Rotorwicklungen 7 des Rotors 6 gebildet wird, wird in der Motorwelle 20, welche einen möglichst geringen Wärmeleitungswiderstand 73 aufweist, über die Kontaktflächen 26 an das Kühlrad 24 geleitet, welches die Wärme aufgrund seiner großen Wandstärke D2 gut aufnehmen und in radial außen liegende Bereiche des Kühlrads 24 effizient befördern kann. Das Kühlrad 24 weist darüber hinaus Ventilatorflügel 18 auf, welche bei der Drehung der Motorwelle 20 einen Kühlluftstrom 71 generieren. Der Kühlluftstrom 71 kühlt einerseits das Kühlrad 24 und hilft somit die über Wärmeleitung transportierte Wärme abzuführen. Weiterhin erzeugt das Kühlrad 24 Kühlluft 71, die direkt an einem Wicklungsende 11 einer Statorwicklung 10 des Stators 9 vorbeistreicht und somit auch den Stator 9 kühlt. Das Motorgehäuse 4 weist Eintrittsöffnungen 12 für Kühlluft 71 wie auch Austrittsöffnungen 13 auf. Die Austrittsöffnungen weisen einen ersten 14 und einen zweiten 15 Rand auf, die jeweils auskragend nach innen bzw. außen gestaltet sind, wodurch ein erster Strömungskanal 16 und ein zweiter Strömungskanal 17 erzeugt wird, welche eine Beschleunigung der Kühlluft 71 unterstützen und somit die Kühlung des Elektromotors 3 positiv beeinflussen. Das Kühlrad 24 ist als Lüfterrad 8 ausgestaltet, indem die Ventilatorflügel 18 auf einer Trägerscheibe 19 aufgebracht sind. Das Lüfterrad 8 ist durch Spritzguss hergestellt. Die Wandstärke D4 der Ventilatorflügel 18 beträgt in etwa 20 % des Durchmessers D3 der Motorwelle 20. Die Kontaktfläche 26 entspricht in etwa der Querschnittsfläche der Motorwelle 20. Durch eine derartige Dimensionierung des Lüfterrads 8 wird eine gute Wärmeabfuhr der in der Getriebeschnecke 27 bzw. in den Rotorwicklungen 7 erzeugten Wärme bewirkt. Die Wärme wird über das Lüfterrad 8 abgeführt, so dass insgesamt eine besonders zügige und effiziente Wärmeabfuhr selbst bei starker Belastung des Küchengeräts 1 erzielt wird.

### Bezugszeichenliste

- 1: Küchengerät
- 2: Gerätegehäuse
- 3: Elektromotor
- 4: Motorgehäuse
- 5: Motordrehachse
- 6: Rotor
- 7: Rotorwicklungen
- 8: Lüfterrad
- 9: Stator
- 10: Statorwicklung
- 11: Wicklungsende
- 12: Eintrittsöffnungen
- 13: Austrittsöffnungen
- 14: erster Rand
- 15: zweiter Rand
- 16: erster Strömungskanal
- 17: zweiter Strömungskanal
- 18: Ventilatorflügel
- 19: Trägerscheibe
- 20: Motorwelle
- 21: erste Scheibenfläche
- 22: zweite Scheibenfläche
- 23: Getriebeelement
- 24: Kühlrad
- 25: Wärmeleitungsstrecke
- 26: Kontaktfläche
- 27: Getriebeschnecke
- 28: Schneckenrad
- 29: Werkzeug
- 30: Schneckengetriebe
- 31: Elektromotor-Getriebestufen-Anordnung
- 32: Getriebegehäuse
- 33: Getriebestufe
- 34: Bajonettverschluss
- 35: erstes Bajonettverschlussteil
- 36: zweites Bajonettverschlussteil
- 37: Verstärkungsrahmen
- 38: Verbindungslinie
- 39: Schrauben
- 40: Verbindungselemente
- 41: Verbindungsvorsprünge
- 42: Verbindungsgegenelemente
- 43: Verbindungsaufnahmen
- 44: Profil
- 45: Schraubflansch
- 46: Verschlusswinkel
- 47: Drehrichtung
- 48: Stirnschraubradgetriebe
- 49: Sonnenrad
- 50: Sonnenradachse
- 51: erstes Stirnschraubrad
- 52: zweites Stirnschraubrad
- 53: Sonnenradwelle
- 54: Planetengetriebe
- 55: Planetenrad
- 56: Planetenradachse
- 57: drehungsübertragende Verbindung
- 58: Stirnradgetriebe
- 59: erstes Stirnrad
- 60: zweites Stirnrad
- 61: erste Stirnradwelle
- 62: zweite Stirnradwelle
- 63: erstes Kegelrad
- 64: zweites Kegelrad
- 65: Kegelradgetriebe
- 66: Schneckengegenrad
- 67: Stirnschraubgegenrad
- 68: Kegelgegenrad
- 69: Hohlrad
- 70: Aufnahme
- 71: Kühlluft
- 72: Wärmeübergangswiderstand
- 73: Wärmeleitungswiderstände
- 74: Rührbesen
- 75: Getriebewellen des Schneckengetriebes 30
- 76: Getriebewellen des Stirnschraubradgetriebes 48
- 77: Getriebewellen des Kegelradgetriebes 65
- 78: Getriebewellen des Stirnradgetriebes 58
- 79: Gehäusedeckel
- 80: Gerätekopf
- 81: Werkzeugarretierung

- L1: Länge der Austrittsöffnungen 13
- L2: Länge des Lüfterrads 8
- L3, L4: Längen
- D1: Dicke der Trägerscheibe 19
- D2: Wandstärke des Kühlrads 24
- D3: Durchmesser der Motorwelle 20
- D4: Wandstärke der Ventilatorflügel 18
- D5: Durchmesser des Kühlrads 24
- W1: Winkel

## Patentansprüche

1. Elektromotor (3) für ein elektromotorisches Küchengerät (1), insbesondere für eine elektromotorische Solo- oder Universalküchenmaschine, umfassend ein Motorgehäuse (4), in dem ein entlang einer Motordrehachse (5) drehbeweglicher Rotor (6) mit einem damit drehfest verbundenen Lüfterrad (8) angeordnet ist sowie ein Stator (9) mit einer Statorwicklung (10), wobei die Statorwicklung (10) ein Wicklungsende (11) aufweist, welches sich parallel zu einer Richtung der Motordrehachse (5) zum Lüfterrad (8) hin erstreckt, **dergestalt, dass die Förderung der Kühlluft (21) radial nach außen erfolgt, wobei** das Wicklungsende (11) und das Lüfterrad (8) sich frei gegenüberliegen, **dadurch gekennzeichnet, dass das Motorgehäuse (4) Eintrittsöffnungen (12) und Austrittsöffnungen (13) für von dem Lüfterrad (8) geförderte Kühlluft (71) aufweist, und die Länge (L1) der Austrittsöffnungen (13) entlang der Richtung der Motordrehachse (5) im Wesentlichen der axialen Länge (L2) des Lüfterrads (8) entspricht,**
**wobei die Austrittsöffnungen (13) einen nach innen in das Motorgehäuse (4) auskragenden ersten Rand (14) aufweisen, der als erster Strömungskanal (16) zur Beschleunigung der Kühlluft (71) dient,**
**und wobei die Austrittsöffnungen (13) weiter einen nach außen auskragenden zweiten Rand (15) aufweisen, der als zweiter Strömungskanal (17) zur Beschleunigung der Kühlluft (71) dient.**

2. Elektromotor (3) nach Anspruch 1, **dadurch gekennzeichnet, dass** der Elektromotor (3) ein Wechselstrommotor ist.

3. Elektromotor (3) nach Anspruch 2, **dadurch gekennzeichnet, dass** der Elektromotor (3) ein Kondensatormotor ist.

4. Elektromotor (3) nach Anspruch 2, **dadurch gekennzeichnet, dass** der Elektromotor (3) ein Spaltpolmotor ist.

5. Elektromotor (3) nach einem der vorherigen Ansprüche, **dadurch gekennzeichnet, dass** das Lüfterrad (8) Ventilatorflügel (18) umfasst und eine senkrecht zur Motordrehachse (5) angeordnete Trägerscheibe (19) mit einer ersten (21) und einer zweiten (22) Scheibenfläche aufweist, wobei die Ventilatorflügel (18) an der Trägerscheibe (19) befestigt sind.

6. Elektromotor (3) nach Anspruch 5, **dadurch gekennzeichnet, dass** die Ventilatorflügel (18) gemeinsam auf der ersten Scheibenfläche (21) angeordnet, insbesondere gut wärmeleitend angeordnet, sind, die insbesondere zur Statorwicklung (10) hin weist.

7. Elektromotor (3) nach einem der vorherigen Ansprüche, **dadurch gekennzeichnet, dass** die maximale nominale Drehfrequenz des Elektromotors (3) in einem Bereich von 8000 bis 20000 Umdrehungen pro Minute, insbesondere in einem Bereich von 10000 und 15000 Umdrehungen pro Minute, liegt.

8. Elektromotor (3) nach einem der vorherigen Ansprüche, **dadurch gekennzeichnet, dass** die maximale aufnehmbare elektrischen Nennleistung des Elektromotors (3) in einem Bereich von 200 W bis 1200 W, insbesondere in einem Bereich von 600 W bis 900 W, liegt.

9. Elektromotorisches Küchengerät (1), insbesondere elektromotorische Solo- oder Universalküchenmaschine, umfassend den Elektromotor (3) nach einem der Ansprüche 1 bis **8.**

## Claims

1. Electric motor (3) for an electromotive kitchen appliance (1), in particular for an electromotive single or all-round food processor, comprising a motor housing (4) in which a rotor (6) that can rotate along a motor axis of rotation (5) and having a fan wheel (8) non-rotatably connected thereto is arranged, and a stator (9) having a stator winding (10), wherein the stator winding (10) has a winding end (11) which extends toward the fan wheel (8) parallel to a direction of the motor axis of rotation (5) in such a way that the cooling air (21) is conveyed radially outwards, wherein the winding end (11) and the fan wheel (8) freely oppose one another, **characterised in that** the motor housing (4) has inlet openings (12) and outlet openings (13) for cooling air (71) conveyed by the fan wheel (8), and the length (L1) of the outlet openings (13) in the direction of the motor axis of rotation (5) substantially matches the axial length (L2) of the fan wheel (8),
wherein the outlet openings (13) have a first edge (14), projecting inwards into the motor housing (4), which is used as a first flow channel (16) for acceleration of the cooling air (71),
and wherein the outlet openings (13) also have a second edge (15), projecting outwards, which is used as a second flow channel (17) for acceleration of the cooling air (71).

2. Electric motor (3) according to claim 1, **characterised in that** the electric motor (3) is an alternating current motor.

3. Electric motor (3) according to claim 2, **characterised in that** the electric motor (3) is a capacitor motor.

4. Electric motor (3) according to claim 2, **characterised in that** the electric motor (3) is a shaded pole motor.

5. Electric motor (3) according to any one of the preceding claims, **characterised in that** the fan wheel (8) comprises fan blades (18) and a support disc (19), arranged perpendicularly to the motor axis of rotation (5), having a first (21) and a second (22) disc face, wherein the fan blades (18) are fastened to the support disc (19).

6. Electric motor (3) according to claim 5, **characterised in that** the fan blades (18) are arranged jointly on the first disc face (21), in particular so as to be very heat-conductive, the disc face pointing in particular toward the stator winding (10).

7. Electric motor (3) according to any one of the preceding claims, **characterised in that** the maximum nominal rotational frequency of the electric motor (3) is in a range from 8,000 to 20,000 revolutions per minute, in particular in a range of 10,000 and 15,000 revolutions per minute.

8. Electric motor (3) according to any one of the preceding claims, **characterised in that** the maximum receivable electrical nominal power of the electric motor (3) is in a range from 200 W to 1,200 W, in particular in a range from 600 W to 900 W.

9. Electromotive kitchen appliance (1), in particular electromotive single or all-round food processor, comprising the electric motor (3) according to any one of claims 1 to 8.

## Revendications

1. Moteur électrique (3) destiné à un ustensile de cuisine à moteur électrique (1), en particulier à un robot de cuisine à moteur électrique indépendant ou universel, comprenant un boîtier de moteur (4) dans lequel se trouve un rotor (6) qui peut effectuer un mouvement de rotation sur l'axe de rotation (5) du moteur, et auquel est reliée une roue de soufflante (8) de façon solidaire en rotation, ainsi qu'un stator (9) comprenant un enroulement de stator (10), l'enroulement de stator (10) présentant une extrémité d'enroulement (11) qui s'étend vers la roue de soufflante (8), parallèlement à la direction de l'axe de rotation (5) du moteur, de sorte que s'ensuive une expulsion de l'air de refroidissement (21) radialement vers l'extérieur, l'extrémité d'enroulement (11) et la roue de soufflante (8) étant libres l'une par rapport à l'autre, **caractérisé en ce que** le boîtier de moteur (4) comprend des ouvertures d'entrée (12) et des ouvertures de sortie (13) pour l'air de refroidissement (71) expulsé par la roue de soufflante (8), et que la longueur (L1) des ouvertures de sortie (13) le long de la direction de l'axe de rotation (5) du moteur correspond essentiellement à la longueur axiale (L2) de la roue de soufflante (8), les ouvertures de sortie (13) comprenant un premier rebord (14) faisant saillie vers l'intérieur du boîtier de moteur (4), ce premier rebord servant de premier canal d'écoulement (16) pour l'accélération de l'air de refroidissement (71), et les ouvertures de sortie (13) comprenant en outre un deuxième rebord (15) faisant saillie vers l'extérieur, ce deuxième rebord servant de deuxième canal d'écoulement (17) pour l'accélération de l'air de refroidissement (71).

2. Moteur électrique (3) selon la revendication 1, **caractérisé en ce que** le moteur électrique (3) est un moteur à courant alternatif.

3. Moteur électrique (3) selon la revendication 2, **caractérisé en ce que** le moteur électrique (3) est un moteur à condensateur.

4. Moteur électrique (3) selon la revendication 2, **caractérisé en ce que** le moteur électrique (3) est un moteur à pôles fendus.

5. Moteur électrique (3) selon l'une des revendications précédentes, **caractérisé en ce que** la roue de soufflante (8) comporte des ailettes de ventilateur (18) et comprend un disque de support (19) disposé perpendiculairement à l'axe de rotation (5) du moteur et comprenant une première (21) et une deuxième (22) surface de disque, les ailettes de ventilateur (18) étant fixées sur le disque de support (19).

6. Moteur électrique (3) selon la revendication 5, **caractérisé en ce que** les ailettes de ventilateur (18) sont conjointement disposées, en particulier disposées de manière bien thermoconductrice, sur la première surface de disque (21), qui en particulier est tournée vers l'enroulement de stator (10).

7. Moteur électrique (3) selon l'une des revendications précédentes, **caractérisé en ce que** la fréquence de rotation nominale maximale du moteur électrique (3) se situe dans une gamme allant de 8 000 à 20 000 tours par minute, en particulier dans une gamme allant de 10 000 à 15 000 tours par minute.

8. Moteur électrique (3) selon l'une des revendications précédentes, **caractérisé en ce que** la puissance électrique nominale maximale que peut absorber le moteur électrique (3) se situe dans une gamme allant de 200 W à 1 200 W, en particulier dans une gamme allant de 600 W à 900 W.

9. Ustensile de cuisine à moteur électrique (1), en particulier robot de cuisine à moteur électrique indépendant ou universel, comprenant le moteur électrique (3) selon l'une des revendications 1 à 8.
